# EUROPÄISCHE PATENTSCHRIFT

(11) **EP 1 183 218 B1**
(45) Veröffentlichungstag und Bekanntmachung des Hinweises auf die Patenterteilung: **19.03.2003**
(21) Anmeldenummer: 00915077.2
(22) Anmeldetag: 14.04.2000
(51) Int. Cl.: C04B 14/24

(54) **LEICHTBETON**
LIGHTWEIGHT CONCRETE
BETON LEGER

(30) Priorität: 16.04.1999 EP 99810318
(43) Veröffentlichungstag der Anmeldung: 06.03.2002
(73) Patentinhaber: Misapor AG, 7302 Landquart (CH)
(72) Erfinder: BASURA, Danko, CH-7000 Chur (CH); ENGI, Daniel, CH-7203 Trimmis (CH)
(74) Vertreter: Schreiber, Wolfgang F.
(86) Internationale Anmeldenummer: CH0000219
(87) Internationale Veröffentlichungsnummer: WO00063132

(56) Entgegenhaltungen:
- EP-A- 0 012 114
- EP-A- 0 292 424
- BE-A- 696 632
- DE-A- 2 549 585
- DE-A- 19 509 731
- GB-A- 528 008
- US-A- 4 086 098
- DATABASE WPI Week 9841 Derwent Publications Ltd., London, GB; AN 98-476583 XP002114151 & JP 10 203836 A (KAMACHI Y) in der Anmeldung erwähnt
- DATABASE WPI Week 197848 Derwent Publications Ltd., London, GB; AN 1978-86741A XP002142098 & JP 53 121819 A (KONISHI H)

## Beschreibung

Die Erfindung betrifft einen Zuschlagstoff für eine mit einem Bindemittel gebundene Gussmasse gemäss Oberbegriff des Patentanspruchs 1 und dessen Verwendung, eine fliessfähige und aushärtbare Gussmasse gemäss Oberbegriff des Anspruchs 3, ein vor Ort gegossenes Bauteil oder vorfabriziertes Element aus einer solchen Gussmasse, sowie ein Verfahren zur Herstellung einer solchen Gussmasse.

Schaumglas wird in Plattenform oder als Schüttgut auf dem Markt angeboten. Zur Herstellung von Schaumglasplatten wird Neuglas mit unterschiedlichen Zusätzen versetzt in Formen gebacken und dadurch geschäumt, danach ausgekühlt und in Platten geschnitten. Die Schaumglasbrocken des Schüttgutes sind Bruchstücke einer Schaumglasschicht, welche durch Backen bei bis zu etwa 900 Grad eines mit mineralischen Zusätzen versetzten Altglaspuders hergestellt wird. Die Herkunft des Glases spielt eine untergeordnete Rolle. Es kann auch Neuglas zur Herstellung des Schaumglasschotters verwendet werden. Das Herstellungsverfahren dieses Schaumglasschotters ist beispielsweise im europäischen Patent Nr. 0 292 424 beschrieben.

Schaumglas ist bekannt als inerter Dämmstoff mit relativ hoher Druckfestigkeit. Der Schaumglasschotter wird unter anderem eingesetzt für Perimeterisolierungen, Sauberkeitsschichten unter Bauwerken, als leichtgewichtiges Schotter für Druckausgleichsschichten im Strassenbau. Dabei wird in erster Linie das niedrige Raumgewicht und die Dämmfähigkeit des Schaumglases, aber auch seine gute und stabile Verdichtbarkeit genutzt Weiter wird insbesondere die Wasserdurchlässigkeit auch des verdichteten Schottergefüges geschätzt Die Wasserdurchlässigkeit basiert auf den grossen Hohlraumquerschnitten zwischen den Schaumglasbrocken praktisch einheitlicher Grösse. Dank der Abwesenheit von Feinanteilen kann die Wasserdurchlässigkeit ohne Ausschwemmgefahr dauerhaft genutzt werden. Da sich die einzelnen Schaumglasbrocken im Gefüge mit den scharfen Kanten in den unzähligen aufgebrochenen Gasporen der Schaumglasbrockenoberfläche ineinander verkrallen, weist Schaumglasschotter den sehr steilen Schüttwinkel von etwa 45° auf. Es ist daher auch im Bereich Hangsicherung einsetzbar.

Unter Glas wird in diesem Zusammenhang eine weite Palette von verglasten und glasähnlichen Materialien verstanden, wie Neuglas jeglicher Zusammensetzung, Altglas jeglicher Herkunft, Schlacke aus Verbrennungsanlagen und insbesondere auch Schlacke auch Hochöfen. Es hat sich gezeigt, dass sich Hochofenschlacke aus Stahlwerken in einem praktisch keine Energie verbrauchenden Verfahren zu Schaumglas verarbeiten lässt. Das dadurch gewonnene Produkt weist augenscheinlich sogar eine höhere Druckfestigkeit und ein niedrigeres Raumgewicht auf als das weiter unten beschriebene Schaumglasprodukt aus Altglas. Sein Preis ist zudem weit günstiger als der unter relativ hohem Energieaufwand hergestellten Altglas-Schaumglases.

Gemäss "Enzyklopädie Naturwissenschaft und Technik", Verlag Moderne Industrie, München 1980, weist ein normaler Beton (normaler Schwerbeton) eine Rohdichte von 2,2 bis 2,5 t/m³, eine Druckfestigkeit von 16 bis 60 MPa (= N/mm²) und einen Wärmeleitwert von 1,97 W/mK auf. Um ein niedrigeres Gewicht und eine tiefere Wärmeleitzahl zu erhalten, kann ein Teil der Zuschlagstoffe Sand, Kies oder Splitt durch verschiedene leichtere Zuschlagstoffe mit Gaseinschlüssen, z.B. Bimsstein oder Blähton, ersetzt oder ein zähflüssiger Feinstmörtel mit Gasblasen durchsetzt werden. Dadurch erhält man Leichtbeton. Gemäss erwähnter Enzyklopädie kann Leichtbeton in vier Gruppen unterteilt werden:

1. Gruppe: Dichter Leichtzuschlagbeton, welcher konstruktiv für Hochhaus- und Industriebauten, sowie Brücken verwendet werden kann. Kennwerte: Rohdichte 1,4 bis 1,9 t/m³; Druckfestigkeit 16 bis 45 MPa (= N/mm²) und Wärmeleitwert 0,58 bis 1,38 W/mK. Für diesen Beton werden die normalen Betonzuschlagstoffe verwendet, jedoch teilweise durch Leichtzuschlagstoffe ersetzt. Als besondere Zuschlagstoffe sind Blähton und Blähschiefer angegeben. Die Gefügeart ist geschlossen. Als ein weiterer möglicher Leichtzuschlagstoff für einen Beton dieser ersten Gruppe werden in der EP 0012114 und der JP-A-10 203836 Schaumglasbrocken vorgeschlagen.

In der EP 0 012 114 ist ein Verfahren zur Herstellung eines Schaumglasgranulates aus einem Glasmehl mit pastenförmigen Blähmitteln, welche aus organischen und anorganischen Substanzen bestehen, beschrieben. Das Granulat besteht aus Bruchstücken eines Schaumglaskörpers und weist 100,000 bis 3 Million Bläschen annähernd gleicher Grösse pro cm³ Granulatmasse auf. Es weist eine Druckfestigkeit von 130 kg/cm² auf. In einer Ausführungsform weisen die Granulatkömer abgebördelte Kanten auf. Um die abgebördelten Kanten zu erreichen, wird das Granulat mechanisch z.B. in einer Vorrichtung nach der Art einer Dragiertrommel derart bearbeitet, dass die Kanten gebrochen werden. Das nach diesem Verfahren erhaltene Granulat ist gemäss der Offenbarung feinporig, sehr leicht und kann als Zuschlagstoff für Leichtbeton oder Füllstoff für Kunststoffe verwendet werden.

Aus der US-A-4,086,098 ist eine Zusammensetzung einer Leichtgussmasse, insbesondere eines Leichtbetons, bekannt. Diese weist gekörnte Zuschlagstoffe auf, die in einem aushärtbaren oder ausgehärteten Binder, insbesondere Portland-Zement, verteilt sind. Die Zuschlagstoffe umfassen eine feine Fraktion von Schaumglasperlen, deren Korngrösse bis 3 mm beträgt. Diese Schaumglasperlen besitzen in ihrem Innern eine oder mehrere Poren mit einem Durchmesser von maximal 0,3 mal der Korngrösse der Schaumglasperle. Weiter umfassen die Zuschlagstoffe eine Fraktion grober Schaumglasperlen einer Korngrösse von über 3 mm. Diese groben Schaumglasperlen besitzen einen mehrporigen Kern mit wesentlich höherer Porendichte als die feinen Schaumglasperlen. Beide Korngrössen von Schaumglasperlen besitzen eine porenlose oder microporige Oberflächenhaut. Die groben und die feinen Schaumglasperlen sind in einem Volumenverhältnis von 6:1 bis 1:1 der Zusammensetzung zugeschlagen und machen wenigstens 50% des trockenen Volumens der Zusammensetzung aus.

Ausgehend von bekannten Verfahren zur Herstellung von kugelförmigen Schaumglaskörpern, welche als Füllmaterial für Leichtmörtel Verwendung finden und solchen zur Herstellung von plattenförmigem Schaumglas, wird in der JP-A-10 203836 ein Verfahren beschrieben, welches mit dem Verfahren gemäss der wesentlich älteren Patentschrift EP 0 292 424 praktisch identisch ist. Es wird damit gemäss der Offenbarung ein Schaumglas mit einer undefinerten massiven Form gewonnen, welches eine relative Dichte von 0.2, einen Haftwasseranteil von 7% und einen durchschnittlichen Korndurchmesser von 3 cm aufweist. Als vorteilhafte Verwendungen dieses Schaumglases werden vorgeschlagen:
- Anheben des Bodenniveaus bei weichem und schwachem Untergrund, wobei eine seitliche Fliessbewegung unterdrückt werden kann,
- Drainageschicht, z.B. unter Tennisplätzen,
- Wärmeisolation im Dach- oder Bodenbereich,
- Gewicht reduzierender Zuschlagstoff zu Beton,
- Schallschutz und Erdbebenschutz.

Eine zweite Gruppe von Leichbeton ist gemäss "Enzyklopädie Naturwissenschaft und Technik" Haufwerkporiger Leichtzuschlagbeton. Dieser kann konstruktiv und wärmedämmend eingesetzt werden in Form von Hohlblocksteinen, Grossplatten und Grossblöcken. Kennwerte: Rohdichte 1,0 bis 1,4 t/m³; Druckfestigkeit 2,5 bis 8 MPa (= N/mm²) und Wärmeleitwert 0,41 bis 0,58 W/mK. Als Zuschlagstoffe für diesen Beton sind Blähton und Blähschiefer, aber auch Hüttenbims, Aschensinter und andere angegeben. Die Gefügeart ist offen.

Eine dritte Gruppe bildet der Porenbeton (Gassilikat-, Schaumbeton), welcher konstruktiv und wärmedämmend eingesetzt werden kann in Form von Wandbauteilen, Dachplatten und Dämmbeton. Bekannt sind auch Porenbetonblocksteine. Kennwerte: Rohdichte 0,3 bis 1,0 t/m³; Druckfestigkeit 0,5 bis 15 MPa (= N/mm²) und Wärmeleitwert 0,058 bis 0,41 W/mK. Als Zuschlagstoffe für diesen Beton sind Feinsand, Flugasche und Schlackensand angegeben. Die Gefügeart ist feinporig.

Gemäss der erwähnten Enzyklopädie bildet Dämmbeton, welcher lediglich wärmedämmend eingesetzt werden kann in Form von Dämmplatten eine vierte Gruppe. Kennwerte: Rohdichte 0,3 t/m³; Druckfestigkeit ungenügend für tragende Teile, und Wärmeleitwert 0,035 bis 0,35 W/mK. Als Zuschlagstoffe für diesen Beton sind Kieselgur und Perlit angegeben.

Diese vier Betongruppen zeigen deutlich, dass bei den bekannten Leichtbetonarten die Druckfestigkeit unter 16 N/mm² fällt, sobald die Wärmeleitzahl unter 0,5 W/mK oder das Raumgewicht unter 1,4 t/m³ fällt. Es ist auch entnehmbar, dass bei einem Raumgewicht von etwa einer Tonne pro Kubikmeter maximal eine Druckfestigkeit von 15 N/mm² und kein besserer Wärmeleitwert als etwa 0,4 W/mK erreicht wird. Eine Druckfestigkeit von über 8 MPa wird nur erreicht, wenn als Zuschlagstoff Blähton oder Blähschiefer verwendet wird oder wenn Porenbeton aus fein gemahlenen Zuschlagstoffen und gasbildenden Additiven hergestellt wird. Blähton und Blähschiefer nutzen jedoch begrenzte Ressourcen, und Porenbeton kann aus Gründen der Qualitätssicherung für tragenden Ortsbeton nicht verwendet werden.

Dieser Aufstellung ist daher weiter zu entnehmen, dass es keinen auf der Baustelle giessbaren Konstruktionsbeton mit einer Rohdichte von unter 1,4 t/m³ und einem Wärmeleitwert von unter 0,58 W/mK gibt. Wohl könnte Porenbeton auch auf der Baustelle gegossen werden. Seine Qualität hängt jedoch sehr stark von den äusseren Bedingungen ab. Die Erreichung einer gewünschten Porenbildung, und damit einer angestrebten Wärmedämmfähigkeit, Leichtigkeit und Tragfestigkeit, ja sogar eines angestrebten Volumens ist daher nicht gewährleistet.

Seit einiger Zeit wird Altglas als Betonzuschlagstoff eingesetzt. Altglas wird dazu zu Glas-Sand gebrochen. In ''Schweizer Ingenieur und Architekt", Heft Nr. 3 vom 18. Januar 2000 veröffentlichte die Begleitkommission SIA 162 "Betonbauten" eine Stellungnahme zur Verwendung von Altglas als Sandersatz in Beton. Darin wir auf die Gefahr hingewiesen, dass Glas bezüglich der Alkali-Silikat-Reaktion ein gefährdeter Zuschlagstoff ist und mit den im Betonporenwasser gelösten Alkalien reagieren kann. Diese Reaktion führt zu voluminösen Reaktionsprodukten, was zu inneren Spannungen und Rissen und zur Zerstörung des Betongefüges führen kann. Weiter wird darauf hingewiesen, dass glasfremde Materialen wie Deckel (Aluminium, Blei) und Etiketten etc. mit dem Altglas gebrochen werden und zu zusätzlichen Problemen führen können. Zudem wird in dieser Mitteilung darauf hingewiesen, dass der Verbund zwischen der Zementmatrix und der glatten Oberfläche der Glaskörner eher schwach ist, und dass die Verwendung von Glas das spätere Recycling des Beton erschweren kann. Deshalb wird von der Begleitkommission SIA 162 und der AG SIA 162-4 "Beton" von der Verwendung von Glas als Sandersatz in Konstruktionsbeton abgeraten.

Es ist daher Aufgabe der Erfindung, eine fliessfähige, aushärtende Masse mit gegenüber dem Stand der Technik relevant besseren und vorherbestimmbaren Eigenschaften bezüglich Raumgewicht, Druckfestigkeit und/oder Wärmeleitwert zu schaffen. Insbesondere soll ein für Hoch- und Tiefbau geeigneter, auf der Baustelle als Ortsbeton in eine Schalung giessbarer Konstruktionsbeton mit gekörnten Leichtzuschlagstoffen vorgeschlagen werden. Für die Leichtzuschlagstoffe sollen Abfallprodukte oder rezykliertes Ausgangsmaterial verwendet werden können.

Erfindungsgemäss ist ein Leichtzuschlagstoff für eine mit einem Bindemittel gebundene Gussmasse gemäss Oberbegriff des Anspruchs 1, bzw. eine Gussmasse gemäss Oberbegriff des Anspruchs 3 dadurch gekennzeichnet, dass die Schaumglasbrocken eine zwischen 0 und der grössten Korngrösse abgestufte Siebkurve mit wenigstens 3 Korngrössen, vorzugsweise mehr als 5 Korngrössen, besonders bevorzugt wenigstens 8 Korngrössen aufweisen.

Als Bindemittel kommt in erster Linie Zement in Frage. Dies ergibt einen Leichtbeton mit gebrochenen Schaumglasbrocken als Leichtzuschlagstoff. Weitere anorganische, aber auch organische Bindemittel sind auch anwendbar. Der Leichtzuschlagstoff kann dabei als einziger Zuschlagstoff vorliegen oder mit herkömmlichen kleinkörnigen Zuschlagstoffen wie Sand vermengt sein. Durch die Verwendung von gebrochenen Schaumglasbrocken kann die Korngrösse beim Brechen oder beim anschliessenden Sieben des gebrochenen Korns gewählt werden. Je nach Anwendungsgebiet wird eine Mischung verschiedener Korngrössen entsprechend einer gewünschten Siebkurve angestrebt. Die Verwendung gebrochener Schaumglasbrocken in einer aushärtbaren Gussmasse vermag nicht nur das Raumgewicht des aus der Gussmasse gegossenen Körpers zu senken. Durch die Oberflächenstruktur der gebrochenen Brocken, welche eine Vielzahl von aufgebrochenen Poren aufweist, ist beispielsweise auch der Verbund zwischen Bindemittel und Schaumglasbrocken sehr hoch. Bei Zement ist der Verbund höher als zwischen Betonkies und Zement. Dieser ausgezeichnete Verbund ermöglicht eine hohe Druckfestigkeit und eine gegenüber dem normalen Schwerbeton bessere Biegezugfestigkeit.

Ein solcher Leichtbeton zeichnet sich durch ein dem normalen Schwerbeton ähnliches Verhalten bezüglich Schwinden und Kriechen aus. Die Querdehnungszahl und die Dampfleitzahl ist wie bei Normalbeton anzusetzen. Jedoch ist die Wärmeleitzahl, abhängig vom Raumgewicht, deutlich tiefer als bei anderem haufwerkporigen Leichtzuschlagbeton. Der Wärmeausdehnungskoeffizient liegt um etwa 15% unter dem eines Normalbetons. Der Feuerwiderstand ist hoch, eine hohe Frost- und Frosttausalzbeständigkeit ist durch porenbildende Zusätze erreichbar.

Unter Verwendung eines kleineren Korns kann ein Dämmputz hergestellt werden. Bei Verwendung von Zuschlagstoffen mit einer Fuller- Siebkurve kann ein druckfestes, geschlossenes Gefüge erreicht werden. Dabei können alle Fraktionen durch die Schaumglasbrocken gebildet sein, oder es können eine oder mehrere Korngrössen, z.B. 0 bis 1 mm, als gewöhnlicher Sand zugefügt sein. Die Siebkurve kann auch gezielt von der Fullerkurve abweichen.

Wie bei normalem Schwer- oder herkömmlichem Leichtbeton kann der Gussmasse auch ein oder mehrere Additive zugefügt sein. Vorteilhaft ist insbesondere ein porenbildendes Additiv, welches neben dem positiven Effekt auf die Frost- und Frosttausalzbeständigkeit von Beton auch einen gewissen Anteil an Feinteilen im Zuschlagstoff ersetzen kann. Auch kann ein Filler zur Reduktion des Zementanteils eingesetzt werden.

Dank der geschlossenporigen Struktur des Schaumglases bleiben auch bei Einwirkung von Feuchtigkeit die Schaumglasbrocken im Innern trocken und die Poren gasgefüllt. Das Schaumglas kann in einem nassen Mörtel eingebettet sein, ohne dass dadurch der Porenanteil verkleinert würde. Da Schaumglas inert ist, bleibt eine Reaktion beim Kontakt des Leichtzuschlagstoffes mit andern Stoffen, z.B. Säuren und Ölen, ausgeschlossen. Der Korrosionsschutz einer Stahlbewehrung durch die Alkalität des Betons ist nicht gefährdet, da das Glas die Betonchemie diesbezüglich nicht beeinflusst.

Als Bindemittel kann auch ein organisches Harz oder ein anderer Kunststoff, Kalk, Kasein, Wasserglas etc. eingesetzt werden. Kunststoffe sind insbesondere für kleinere Fertigteile wie Wasserrinnen, Schachtböden, Wetterschenkel etc. geeignet. Kalk und Kasein sind eher im Putz- und Oberflächenbereich einsetzbar.

Vorteilhaft sind die Schaumglasbrocken kantig gebrochen. Durch kantiges Brechen der ursprünglichen Schaumglaskörper geht von ihrem Volumen kaum etwas verloren. Für erste Versuche zur Herstellung von Schaumglasbeton ist die Anmelderin der Fachmeinung gefolgt, dass für ein gutes Betongefüge ein Rundkom notwendig ist, und hat Rundkorn hergestellt. Im Gegensatz zu kantigem Brechen des Schaumglases führt ein Brechen eines Rundkorns jedoch zu massiven Einbussen und einem übermässigen Anfall von Feinanteilen. Obwohl gebrochene Schaumglasbrocken sich mit Ihren Kanten und Ecken gegeneinander verkeilen und sich ineinander mit grossen Zwischenräumen verkrallen sind überraschenderweise die Verarbeitbarkeit und die Verdichtbarkeit einer Gussmasse mit kantigen Schaumglasbruchstücken als Zuschlagstoff ebenso gut wie die einer solchen mit Rundkorn.

Soll ein dichtes, druckfestes und leichtes Gefüge erreicht werden, liegen in einer Gussmasse die Schaumglasbrocken vorteilhaft in unterschiedlichen Korngrössen vor. Um ein Gefüge aus lediglich Leichtzuschlagstoffen und Bindemittel zu erreichen, weisen die Leichtzuschlagstoffe vorteilhaft eine der Fullerkurve angenäherte Siebkurve auf.

Zur Herstellung einer anforderungsgerechten Kurve der Zuschlagstoffe wird Schaumglas gebrochen, in Fraktionen ausgesiebt und die Fraktionen gezielt gemischt. Die Zusammensetzung der Gussmasse, bzw. der Zuschlagstoffe bezüglich Menge, Material und Korngrösse der Fraktionen wird zweckmässigerweise anhand einer Stoffraumrechnung abgeschätzt. Dadurch kann eine spezifische Anforderung bezüglich Lambda-Wert und Druckfestigkeit des Bauteils angenähert werden. Dies erlaubt die Herstellung spezifischer Zusammensetzungen für gezielte Einsatzbereiche. So kann z.B. für Fenstergesimse die Wärmedämmfähigkeit auf Kosten der Druckfestigkeit verbessert werden, wogegen für Ortsbeton für Untergeschosswände die Druckfestigkeit auf Kosten der Wärmedämmfähigkeit erhöht werden kann. Sicherheitshalber werden Probewürfel vorgängig zu den Bauarbeiten geprüft und dabei die errechneten Parameter nachgemessen, so dass die Zusammensetzung aufgrund der Messungen angepasst werden kann.

Vorteilhaft ist der Gussmasse eine Faser- oder Spanbewehrung zugesetzt, welche wie porenbildendes Additiv ebenfalls Feinanteile wie Filler oder Zuschlagstoffe der Korngrösse 0 bis 0.5 mm ersetzen kann. Diese Bewehrung erhöht zudem die Belastbarkeit der ausgehärteten Masse.

Vorteilhaft sind die Schaumglasbrocken aus Glas und/oder glasähnlichem Material und aus einem Aktivator hergestellt. Der Aktivator, welcher die Porenbildung im Glas beim Blähen im Blähofen oder im Blährohr bewirkt, ist aus Siliciumkarbid und Kohlenstoff sowie Borax oder wenigstens einem Metalloxyd zusammengesetzt.

Flüssige Schlacke oder flüssiges Glas kann durch Einmischen eines gasbildenden Schäumungsmittels in die flüssige Schmelze direkt geschäumt werden. Das Schäumungsmittel setzt schon unmittelbar nach Kontakt mit der heissen Schlacke Gas frei und bringt diese zum Aufschäumen.

Bei einem zur Zeit unveröffentlichten Verfahren zur Schäumung von Hochofenschlacke aus Stahlwerken geschieht der Einmischvorgang folgendermassen: Auf eine rotierende Scheibe wird flüssige Schlacke gegossen. Durch die Zentrifugalkraft breitet sich die Schlacke auf der Scheibe zu einem dünnen Film mit grosser Oberfläche aus. Auf diesen Film wird nun das Schäumungsmittel, eine Mischung mit Siliciumkarbid und Kohlenstoff sowie Borax oder wenigstens einem Metalloxyd, pulverförmig aufgestreut, worauf die Schlacke sofort beginnt aufzuschäumen. Am Scheibenrand wird das Schlacke/Schäumungsmittelgemisch nach aussen gegen eine rohrförmige Wandung geschleudert. Da die Temperatur der Schlacke noch immer über ihrer Schmelztemperatur liegt, fliesst sie weiter aufschäumend der Wandung entlang nach unten. Am unteren Rand der Wandung tropft der Schaum auf ein Plattenband ab, mit welchem er fortwährend wegtransportiert wird.

Die Temperatur des erzeugten Schlackenschaums liegt oberhalb 1000 °C. Zumindest anfangs ist daher der Schaum auf dem Transportband in seinem Innern noch immer weich und zähflüssig. Durch passives Abkühlenlassen an Luft zerbricht der Schlackenschaum in Brocken praktisch gleichmässiger Körnung. Diese heissen Schlackenschaumbrocken werden mit dem Plattenband aufgehäuft.

Zur Herstellung von Schaumglasbrocken aus Altglas wird das Mehl aus Glas oder glasähnlichem Material mit einer Menge von 1,5 bis 2,5% des mehlförmigen Aktivators vermischt und das Gemisch in einem einzigen Verfahrensschritt bei einer Temperatur zwischen 750 und 950 °C gebläht.

Das resultierende Produkt ist ein Glasschaumkörper, welcher bei geeigneten Voraussetzungen während dem Abkühlen selbsttätig in ein Monokorn zerbricht. Das Verfahren zur Herstellung eines solchen Schaumglases ist im Europäischen Patent EP 0 292 424 beschrieben, auf welches an dieser Stelle ausdrücklich Bezug genommen wird. Als Aktivator wird in diesem Verfahren eine der folgenden Mischungen vorgeschlagen:
A) 50 bis 80 Gewichtsteile Siliciumkarbid, 20 bis 50 Gewichtsteile Borax und 1 bis 10 Gewichtsteile Kohlenstoff in trockenem Zustand, oder
B) 85 bis 95 Gewichtsteile Siliciumkarbid, 1 bis 10 Gewichtsteile Manganoxyd und 1 bis 10 Gewichtsteile Kohlenstoff, oder
C) 45 bis 50 Gewichtsteile Siliciumkarbid, 1 bis 10 Gewichtsteile Kohlenstoff, 20 bis 26 Gewichtsteile Kupferoxyd und 20 bis 26 Gewichtsteile Bleioxyd in trockenem Zustand.

Es kann auch zur Sicherung einer guten Funktionsweise des Verfahrens vor dem Homogenisieren von Aktivator und Glasmehl noch Metalloxyd, z.B. Kupfer- oder Bleioxyd dem mit Aktivator B) zu versetzenden Glasmehl beigefügt werden. Die Menge von Metalloxyd wird mit 0,5 bis 1,5 Gewichtsprozent des Glasmehls angegeben. Als Kohlenstoff wird Flammruss bevorzugt. Dieser oxydiert beinahe vollkommen, was tur die Festlegung der Porengrösse von Vorteil ist. Als Manganoxyd kann Braunstein verwendet werden.

Das Schaumglas aus diesem Verfahren wie auch der Schlackenschaum zeichnet sich durch eine hohe Druckfestigkeit aus. Beide sind geruchsneutral und inert. Die Eigenschaften können gezielt variiert werden. Zumindest Glasschaum kann durch färbende Zusätze eingefärbt werden. Die Beigabe von Blei in Form von Bleioxyd oder Bleiglas senkt z.B. die Strahlendurchlässigkeit.

Vorteilhaft weisen die Schaumglasbrocken für eine solche Gussmasse eine Druckfestigkeit von über 1 N/mm², vorzugsweise über 3 N/mm², besonders bevorzugt durchschnittlich über 5 N/mm² auf. Die Druckfestigkeit der Schaumglasbrocken, welche aus dem oben beschriebenen Verfahren resultieren, kann bis zu durchschnittlich 6 N/mm² oder mehr aufweisen. Die hohe Druckfestigkeit des Leichtzuschlagstoffes gewährleistet eine hohe Druckfestigkeit der ausgehärteten Gussmasse. Die Druckfestigkeit von bewehrten Testkörpern erreichte dank diesem Wert des darin ausschliesslich verwendeten Zuschlagstoffes Schaumglas über 30 N/mm², sogar 45 N/mm² und mehr, was zumindest dem Grenzbereich zwischen Beton B I und B II, und damit einem für mittel- und hochbeanspruchte Beton- und Stahlbetonbauteile geeignetem Beton entspricht.

Vorteilhaft sind die Schaumglasbrocken geschlossenzellig, damit keine Flüssigkeit in die Poren eindringen kann. Dadurch bleibt z.B. die Dämmeigenschaft des Brockens auch in nasser Umgebung unverändert. Auch das Raumgewicht einer solchen Masse kann sich, z.B. durch Wasseraufnahme, nur in Grenzen verändern. Die Poren können durch das Bindemittel nicht gefüllt werden.

Bei einer solchen Gussmasse für eine spezielle Verwendung, z.B. leichter Füllbeton für Zwischenböden, Holz-Betonverbund, statisch belastbare Leichtbetonfertigteile, wie Treppen, Stützen, Stürze, nichttragende Elemente wie Brüstungen, Zwischenwände, wärmedämmende Elemente, Fussböden, Wandbeläge, Schallschutzelemente, ist die Rohdichte und/oder Porengrösse der Schaumglasbrocken vorteilhaft auf diese Verwendung der Gussmasse abgestimmt. Es kann davon ausgegangen werden, dass für hohe Druckfestigkeit ein hohes Raumgewicht und eine kleine Porengrösse anzustreben ist. Für Luftschall schluckende Eigenschaften ist wohl offenes, grossräumiges Porenwerk mit hohem Raumgewicht, für niedriges Raumgewicht eine grossporige, dünnwandige Ausgestaltung des Schaumglases vorteilhaft.

Für eine spezielle Verwendung der Gussmasse, z.B. Strahlenschutz in Röntgenbereichen, für Bunker oder zur Abschirmung von Produktionsbereichen mit Strahlenemmissionen, oder Dekoroberflächen bei gegossenen Fussböden, Fliesen, Leisten etc., sind die Eigenschaften der Schaumglasbrocken vorteilhaft auf diese Verwendung der Gussmasse abgestimmt. Dazu ist eine gezielte Formulierung der Zusammensetzung der Rohstoffe für die Herstellung der Schaumglasbrocken, z.B. durch Zugabe von Blei oder Farbstoffen, zweckmässig.

Bisher wurden Leichtzuschlagstoffe für Beton als Monokorn in die Betonmasse gegeben, wodurch eine spezielle Korngrösse den etwa eine Fuller-Siebkurve aufweisenden Zuschlagstoffen hinzugerügt würde. Bei einer fliessfähigen und aushärtbaren Gussmasse, insbesondere Leichtbeton, mit einem Bindemittel, insbesondere Zement, und wenigstens einem Leichtzuschlagstoff, weisen aber mit Vorteil die Zuschlagstoffe insgesamt eine ausgewogene Siebkurve auf. Der Leichtzuschlagstoff weist dazu eine zwischen 0 und der grössten Korngrösse abgestufte Siebkurve mit wenigstens 3, vorzugsweise mehr als 5, besonders bevorzugt wenigstens 8 Korngrössen auf. Dadurch kann der Anteil an Leichtzuschlagstoff erhöht werden. Vorteilhaft macht dabei der Leichtzuschlagstoff wenigstens 80% des Zuschlagstoffes aus, bevorzugt 90%, besonders bevorzugt 100%.

Die Erfindung betrifft auch ein vorfabriziertes Element aus einem Bindemittel und wenigstens einem Zuschlagstoff, z.B. Fliese oder Verkleidungsplatte, Gehwegplatte, Dekorstab, Brüstungselement, Fertigtreppe, Wandscheibe, Bodenplatte, Tragbalken, Sturz, Gesimse, Betonwerksteine etc. Ein solches Element weist erfindungsgemäss gebrochene Schaumglasbrocken in wenigstens 3 Korhgrössen als Zuschlagstoff auf. Die Vorteile davon sind oben ausgeführt Bei der Vorfabrikation ist insbesondere das Gewicht der vorfabrizierten Teile ausschlaggebend. Durch die ausgezeichnete Druckfestigkeit und Biegezugfestigkeit des Materials bei niedrigem Raumgewicht können z.B. Geschosstreppen einstückig hergestellt und mit einem Kran versetzt werden. Wandelemente und tragende Bauteile können gegenüber normalem Schwerbeton bei gleichem Gewicht bis zum doppelten Volumen aufweisen.

Vorteilhaft kann ein solches vorfabriziertes Element eine geschnittene, gesägte, geschliffene und/oder gefräste Oberfläche aufweisen. Die durch schleifen, sägen etc. erreichte Oberfläche zeigt das Gefüge mit dem porösen Schaumglaszuschlagstoff. Diese Struktur kann z.B. dekorativ, schalltechnisch oder zwecks besserer Haftung von Putzen etc. genutzt werden. Als Beispiele seien angeführt Fliesen, gebildet durch von einem Stab abgeschnittene Scheiben, Wandtafeln mit dekorativer und schallstreuender Wirkung, Profilstäbe zu Dekorationszwecken mit der gleichen Oberfläche wie die separat versetzten Wandelemente, leichtgewichtige und daher beim Versetzen rückenschonende Gehwegplatten mit rutschsicherer Oberfläche. Der möglichen Anwendungen sind kaum Grenzen gesetzt.

Desgleichen betrifft die Erfindung auch ein vor Ort gegossenes Bauteil von Hoch- oder Tiefbauten mit Schaumglasbrocken in wenigstens 3 Korngrönen als Zuschlagstoff. Anwendungsgebiete davon sind z.B. tragende und nichttragende Wände, Pfeiler, Decken und Böden, Pfähle, thermisch isolierende Fundamentplatten, Strassenbeläge, Brücken, Unterlagsböden und rutschsichere Bodenbeläge. Praktisch jedes Bauteil, welches in Schwerbeton oder herkömmlichem Leichtbeton hergestellt werden kann, kann auch aus Schaumglasbeton hergestellt werden. Dabei können die besonderen Vorteile, insbesondere Leichtgewichtigkeit und Druckfestigkeit, Geschlossenporigkeit und Wärmedämmvermögen, Beständigkeit gegen Chemikalien, Giessbarkeit, Pumpbarkeit, Abstimmbarkeit der Mischung etc. genutzt werden.

Ein solches Bauteil oder Element weist vorteilhaft ein Raumgewicht unter. 1400 kg/m³, vorzugsweise unter 1200, besonders bevorzugt um oder unter 1000 kg/m³ auf. Leichte Bauteile ermöglichen oft eine Reduktion der Fundation, eine Verkleinerung der Bauteildimensionen oder eine Vergrösserung der Spannweiten. Elemente können bei kleinerem spezifischen Gewicht umso grösser sein. Insbesondere im Brücken- oder Hochhausbau, oder für Bauten über schlecht tragendem Gelände ist die Reduktion des Eigengewichts der Baute von grossem Vorteil. Ummantelungen von Leitungen können mit solchem Leichtbaustoff im Wasser schwimmend ausgeführt werden.

Vorteilhaft weist ein solches Bauteil oder Element eine Druckfestigkeit von wenigstens 12, vorzugsweise 18, besonders bevorzugt über 25 N/mm² auf. Ab den Festigkeitsklassen Bn 150 und Bn 250 kann der Leichtbeton oder ein vergleichbarer Leichtbaustoff für statisch belastete Bauteile verwendet werden.

Weist das Bauteil oder Element eine Wärmeleitfähigkeit von maximal 0,4, vorzugsweise unter 0,35, besonders bevorzugt unter 0,32 W/mK, so ist es zudem wärmedämmend und dadurch die Feuersicherheit eines Gebäudes erhöhend einsetzbar.

Vorteilhaft zeichnet sich ein Bauteil oder Element durch ein Verhältnis von Druckfestigkeit in N/mm² und Raumgewicht (trocken) in kg/m³ von über 1:80, vorzugsweise über 1:60, besonders bevorzugt über 1:50 aus. Je grösser der Wert dieses Verhältnisses ist, desto günstiger ist er, da mit einem leichteren Bauteil die gleichen oder grössere Lasten abgetragen werden können.

Die Erfindung betrifft auch ein Verfahren zur Herstellung von strukturierten Oberflächen in gegossenen Bauteilen. Bei diesem Verfahren wird eine Gussmasse mit einem Bindemittel und Schaumglasbrocken als Zuschlagstoff in eine Schalung oder Form gegossen und die Oberfläche nach dem Aushärten der Gussmasse abgetragen. Zum Abtragen der Oberfläche kann die durch das Bindemittel gebildete äussere Haut abgeschliffen, abgefräst, abgekratzt, abgespitzt, gestockt etc. werden. Die neue Oberfläche ist danach geprägt durch die Gefügestruktur mit dem porenreichen Zuschlagstoff. Dies ergibt eine dekorative, rutschfeste, schalltechnisch interessante Oberfläche.

Diese Oberfläche kann danach versiegelt werden, um die aufgebrochenen Poren zu verschliessen. Das Bindemittel und/oder die Schaumglasbrocken können vor dem Giessen eingefärbt werden. Dadurch kann die Farbwirkung des Bauteils gestaltet werden.

Nachfolgend wird anhand von Beispielen die Erfindung näher erläutert: Das gebackene Schaumglas verlässt den Blähofen in einer durch die eingangsseitige Schichtstärke des Glasstaubes gegebenen Plattenstärke. Diese Schaumglasplatte zerbricht aufgrund der in der Platte entstehenden Temperaturunterschiede je nach Dicke der Platte und je nach ihrer Oberflächenstruktur in Brocken einheitlicher Grösse. Die kleinsten Standardmasse der Brocken sind etwa 10/25 mm. Für kleinere Korngrössen muss dieses Korn gebrochen werden. Bei einer ersten Versuchsreihe mit Schaumglasbeton wird durch einfaches Brechen des aus dem Blähofen kommenden Monokorns eine Siebkurve der Schaumglasbrocken erreicht, welche der für Beton bewährten Fullerkurve grob angenähert ist.

Die 0 bis 16 mm Siebkurve des in dieser Versuchsreihe verwendeten Schaumglases hat einen Anteil von 28% der Fraktion zwischen 0 und 1 mm (Betonkies ca. 12%), 18,3% zwischen 1 und 4 mm (Betonkies ca. 24%) und 53.7% zwischen 4 und 16 mm (Betonkies ca. 64%). Dabei ist gegenüber den Idealanteilen der angestrebten Fullerkurve der Anteil zwischen 0 und 0,25 mm deutlich unterdurchschnittlich und der Anteil zwischen 0,25 und 1 mm deutlich überdurchschnittlich vertreten. Daher muss mit einem überdurchschnittlichen Anteil an Zement gerechnet werden. Es wird zudem ein porenbildendes Additiv zugesetzt. Nachfolgend seien vier Betonmischungen als Beispiele aus dieser ersten Versuchsreihe herausgegriffen.

Ein erster Beton wird aus einem 650 kg/m³ Zement, ohne Filler, mit 258 kg/m³ Wasser, 120 kg/m³ Schaumglas 0-1 mm, 79 kg/m³ Schaumglas 1-4 mm, 231 kg/m³ Schaumglas 4 bis 16 mm und 3.9 kg/m³ Betonzusatz zur Porenbildung im Mörtel hergestellt. Daraus ergibt sich ein Beton, welcher nach 28 Tagen ein Raumgewicht von 1350 kg/m³ aufweist. Dieses reduziert sich nach dem Trocknen auf 1220 kg/m³. Die Druckfestigkeit weist 25 N/mm², die Biegezugfestigkeit 3 N/mm² auf. Die Wärmeleitfähigkeit des getrockneten Betons beträgt etwa 0.38 W/mK, das E-Modul etwa 8500 N/mm².

Ein zweiter Beton mit 550 kg/m³ Zement, 153 l/m³ Wasser, 3.3 kg/m³ des Betonzusatzes und 460 kg/m³ des Schaumglases mit gleicher Siebkurve ergibt einen Beton mit 1265 kg/m³ nach 28 Tagen. Getrocknet wiegt er noch 1100 kg/m³. Die Druckfestigkeit liegt nach 28 Tagen bei 22 N/mm², die Biegezugfestigkeit bei 2,8 N/mm². Die Wärmeleitfähigkeit liegt um 0.34 W/mK, das E-Modul um 7000 N/mm².

Ein Beton aus 450 kg/m³ Zement, 233 l/m³ Wasser, 2.7 kg/m³ porenbildendem Betonzusatz und 505 kg/m³ des Schaumglases weist nach 28 Tagen ein nasses Raumgewicht von 1190, trocken 1040 auf. Die Druckfestigkeit zu diesem Zeitpunkt liegt bei 19 N/mm², die Biegezugfestigkeit bei 2.5 N/mm². Wärmeleitfähigkeit und E-Modul ergeben etwa 0.31 W/mK und 6000 N/mm².

Ein Beton, welcher getrocknet noch 970 kg/m³ wiegt, wird aus 350 kg/m³ Zement, 217 l/m³ Wasser, 2,1 kg/m³ Betonzusatz und 535 kg/m³ Schaumglas 0-16 mm der gleichen Siebkurve hergestellt. Die Druckfestigkeit und Biegezugfestigkeit liegen nach 28 Tagen bei 12 bzw. 2.2 N/mm². Die Wärmedämmfähigkeit erreicht etwa 0.28 W/mK und das E-Modul etwa 4'500 N/mm².

Mit diesen Werten wird trotz deutlichen Abweichungen von einer bisher als ideal geltenden Fuller-Siebkurve der Zuschlagstoffe bereits ein Beton erreicht, welcher nicht mehr in die gängigen Klassierungen passt. Der Schaumglasbeton ist überraschenderweise wie gewöhnlicher Schwerbeton giessbar und pumpbar. Die Entmischung des Betons ist auch beim Vibrieren unbedeutend. Es wird damit ein Beton von unter 1,4 t/m³ erreicht, welcher auf der Baustelle wie gewöhnlicher Schwerbeton verarbeitbar ist, eine wenigsten drei- bis fünffache Druckfestigkeit eines vom Raumgewicht her vergleichbaren herkömmlichen Leichtzuschlagbetons und gleichzeitig eine um 25 bis 35% bessere Wärmedämmfähigkeit aufweist.

Mit einem Trommelbrecher kann die Kornverteilung des Schaumglases verbessert werden. Die Korngrössenverteilung im Schaumglas-Zuschlagstoff kann durch Brechen im Trommelbrecher, anschliessendes Aussieben und Zusammenstellen der gewünschten Siebkurve aus den verschiedenen ausgesiebten Korngrössen optimiert werden. Durch eine Verbesserung der Siebkurve der Zuschlagstoffe zugunsten der Druckfestigkeit und die Zugabe von Stahlfaserarmierung kann in einer Weiterentwicklung der Erfindung bei einem Raumgewicht von etwas über 1300 kg/m³ Druckfestigkeiten bis über 30 N/mm² erreicht werden. Dies ergibt ein Leistungsverhältnis zwischen Druckfestigkeit und Raumgewicht in den angegebenen Einheiten von über 1:45. Dies entspricht der Leistung eines Schwerbetons von 2,5t/m³ Raumgewicht und 55 N/mm² Druckfestigkeit. Bei gutem Kornaufbau liegen die Druckfestigkeiten eines erfindungsgemässen Leichtbetons mit 900 bis 1000 kg/m³ immer noch zwischen 13 und 17 N/mm². Mit einem Raumgewicht von 1000 bis 1100 kg/m³ können Druckfestigkeiten zwischen 17 und 21 N/mm², bei 1100 bis 1200 kg/m³ zwischen 21 und 26 N/mm² erreicht werden. Eine Verbesserung dieser Werte im Laufe der weiteren Verfeinerung der Rezepturen ist zu erwarten. Bei einer Druckfestigkeit von 45 N/mm², wie an einem bewehrten Bauteil gemessen werden kann, liegt obiges Verhältnis über 1/30.

Zusammenfassend kann gesagt werden, dass durch die Verwendung von gebrochenem Schaumglas als Zuschlagstoff für eine mit einem Bindemittel-gebundene Gussmasse ein Baustoff erreicht wurde, welcher eine sehr breit gefächerte Anwendung ermöglicht. Dabei werden insbesondere geschätzt:
Seine bauphysikalischen Eigenschaften wie
   - hohe Druckfestigkeit und hohe Ausreissfestigkeit bei niedrigem Raumgewicht und tiefem Wärmeleitwert,
   - hohe Feuerwiderstandsfähigkeit dank tiefer Wärmeleitzahl und niedrigem Elastizitätsmodul
   - gute Volumenkonstanz dank einem niedrigen Wärmeausdehnungkoeffizienten,
   - geringe Wasseraufnahmefähigkeit dank geschlossenporigem, nicht saugfähigem Zuschlagstoff,
   - hoher Korrosionsschutz für die Stahlbewehrung dank hohem Gehalt an Zementstein; aber auch seine Verarbeitbarkeit, insbesondere
   - seine Mischbarkeit und Transportierbarkeit (niedriges Gewicht);
   - seine Giessbarkeit und Pumpbarkeit,
   - sein Verdichtbarkeit und Vibrierbarkeit.

Weiter wird die optische, akustische und/oder taktile Wirkung des gebrochenen, gesägten oder angeschliffenen Bauteiles geschätzt an
- gegossenen oder verlegten Bodenbelägen,
- gegossenen oder versetzten, sichtbare Oberflächen bildenden Bauteilen, z.B. an Wänden und Decken,
- Akustikelementen und Schallschutzelementen,
- Dekorelementen.

Versuche mit aus Hochofenschlacke gewonnenen Schaumglasbrocken liegen zur Zeit noch nicht vor. Die oben angeführten Resultate mit Schaumglasbrocken aus Altglas können voraussichtlich mit dem Hochofenschlacken-Produkt aufgrund von dessen Leichtigkeit und Druckfestigkeit noch übertroffen werden. Die Umweltverträglichkeit und ökologische Wertschöpfung aus Abfallprodukten wie Altglas oder Hochofenschlacke sind weitere, nicht zu unterschätzende Qualitäten dieses Leichbaustoffs. Die Herstellungskosten der geschäumten Hochofenschlacke sind zudem niedrig, so dass das Produkt als Konkurrenz zu herkömmlichem Betonkies in Betracht gezogen werden kann.

## Patentansprüche

1. Leichtzuschlagstoff für eine mit einem Bindemittel gebundene Gussmasse umfassend Schaumglasbrocken von gebrochenem Schaumglas, **dadurch gekennzeichnet,**
**dass** die Schaumglasbrocken eine zwischen 0 und der grössten Korngrösse abgestufte Siebkurve mit wenigstens 3 Komgrössen, vorzugsweise mehr als 5, besonders bevorzugt wenigstens 8 Korngrössen aufweisen.

2. Verwendung eines Leichzuschlagstoffes gemäss Anspruch 1 zur Herstellung einer mit einem Bindemittel gebundenen Gussmasse.

3. Fliessfähige und aushärtbare Gussmasse, insbesondere Leichtbeton, mit einem Bindemittel, insbesondere Zement, und wenigstens einem Leichtzuschlagstoff, wobei der Leichtzuschlagstoff aus Schaumglasbrocken von gebrochenem Schaumglas besteht, **dadurch gekennzeichnet,**
**dass** die Schaumglasbrocken eine zwischen 0 und der grössten Korngrösse abgestufte Siebkurve mit wenigstens 3 Komgrössen, vorzugsweise mehr als 5, besonders bevorzugt wenigstens 8 Korngrössen aufweist

4. Gussmasse nach Anspruch 3, **dadurch gekennzeichnet, dass** die Komgrössen der Zuschlagstoffe insgesamt eine - vorzugsweise der Fullerkurve angenäherte - ausgewogene Siebkurve aufweisen.

5. Gussmasse nach Anspruch 3 oder 4, **dadurch gekennzeichnet, dass** der Anteil an Schaumglasbrocken wenigstens 80%, vorzugsweise 90%, besonders bevorzugt 100% der Zuschlagstoffe ausmacht.

6. Gussmasse nach einem der Anspüche 3 bis 5, **dadurch gekennzeichnet, dass** alle Zuschlagstoffe mit einer Korngrösse von 4 mm und grösser aus gebrochenem Schaumglas bestehen.

7. Gussmasse nach Anspruch 6, **dadurch gekennzeichnet, dass** alle Zuschlagstoffe mit einer Korngrösse bis 4 mm aus gebrochenem Schaumglas bestehen.

8. Gussmasse nach einem der Ansprüche 3 bis 7, **dadurch gekennzeichnet, dass** das Schaumglas kantig gebrochen ist.

9. Gussmasse nach einem der Ansprüche 3 bis 8, **gekennzeichnet durch** eine Faseroder Spanbewehrung.

10. Gussmasse nach einem der Ansprüche 3 bis 9, **dadurch gekennzeichnet, dass** die Schaumglasbrocken eine durchschnittliche Druckfestigkeit von über 1 N/mm², vorzugsweise über 3 N/mm², besonders bevorzugt durchschnittlich über 5 N/mm² aufweisen.

11. Gussmasse nach einem der Ansprüche 3 bis 10 für leichter Füllbeton, statisch belastbare Leichtbetonfertigteile, nichttragende Elemente, Fussböden, Schallschutzelemente und dergleichen, **dadurch gekennzeichnet, dass** die Rohdichte und/oder Porengrösse der Schaumglasbrocken auf diese Verwendung der Gussmasse abgestimmt ist.

12. Gussmasse nach einem der Ansprüchen 3 bis 11 für eine spezielle Verwendung, z.B. Strahlenschutz, Dekoroberfläche, **gekennzeichnet durch** eine gezielte Formulierung der Zusammensetzung der Rohstoffe für die Herstellung der Schaumglasbrocken, z.B. **durch** Zugabe von Blei oder Farbstoffen, so dass die Eigenschaften der Schaumglasbrocken auf diese Verwendung der Gussmasse abgestimmt sind.

13. Vor Ort gegossenes Bauteil von Hoch- oder Tiefbauten oder vorfabriziertes Element aus einer Gussmasse gemäss einem der Ansprüche 3 bis 12.

14. Bauteil oder Element gemäss Anspruch 13, **gekennzeichnet durch** eine geschnittene, gesägte, geschliffene und/oder gefräste Oberfläche.

15. Bauteil oder Element nach Ansprach 13 oder 14, **dadurch gekennzeichnet, dass** das Raumgewicht unter 1400 kg/m³, vorzugsweise unter 1200, besonders bevorzugt um oder unter 1000 kg/m³ liegt.

16. Bauteil oder Element nach einem der Ansprüche 13 bis 15, **gekennzeichnet durch** eine Druckfestigkeit von wenigstens 12, vorzugsweise 18, besonders bevorzugt über 25 N/mm².

17. Bonteil oder Element nach einem der Ansprüche 13 bis 16, **gekennzeichnet durch** eine Wärmeleitfähigkeit von maximal 0,4, vorzugsweise unter 0,35, besonders bevorzugt unter 0,32 W/mK.

18. Bauteil oder Element nach einem der Ansprüche 13 bis 17, **gekennzeichnet durch** ein Verhältnis von Druckfestigkeit in N/mm² und Raumgewicht (trocken) in kg/m³ von über 1:80, vorzugsweise über 1:60, besonders bevorzugt über 1:50.

19. Verfahren zur Herstellung von strukturierten Oberflächen in gegossenen Bauteilen, **dadurch gekennzeichnet, dass** eine Gussmasse mit einem Bindemittel und gebrochenen Schaumglasbrocken als Zuschlagstoff in eine Schalung oder Form gegossen und die Oberfläche nach dem Aushärten der Gussmasse abgetragen, z.B. angeschiffen oder gestockt wird.

20. Verfahren nach Anspruch 19, **dadurch gekennzeichnet, dass** die Oberfläche versiegelt wird.

21. Verfahren nach Anspruch 19 oder 20, **dadurch gekennzeichnet, dass** das Bindemittel und/oder das Schaumglas vor dem Giessen eingefärbt werden.

22. Verfahren zur Herstellung einer Gussmasse gemäss einem der Ansprüche 3 bis 12, **dadurch gekennzeichnet, dass** Schaumglas aufbereitet wird, indem es gebrochen und in Fraktionen ausgesiebt wird, und dass die gebrochenen Fraktionen anforderungsgerecht gemischt werden.

23. Verfahren nach Anspruch 22, **dadurch gekennzeichnet, dass** die Zusammensetzung der Gussmasse bzw. die Zusammensetzung der Zuschlagstoffe bezüglich Menge, Material und Korngrösse der Schaumglas-Fraktionen anhand einer Stoffraumrechnung abgeschätzt wird.

## Claims

1. Light weight aggregate for a casting compound that is bond with a binder, comprising foam glass lumps of crashed foam glass, **characterised in that** the foam glass lumps exhibit a screen-analysis curve that is graded between 0 and the largest grain size with at least 3 fractions, preferably more than 5 fractions, in particularly preferred manner at least 8 fractions.

2. Use of a light weight aggregate according to Claim 1 in the production of a casting compound that is bond with a binder.

3. A flowable and settable casting compound, in particular lightweight concrete, with a binder, in particular cement, and lightweight aggregate, the light weight aggregate consisting of crushed foam glass, **characterised in that** the lightweight aggregate exhibits a screen-analysis curve that is graded between 0 and the largest grain size with at least 3 fractions, preferably more than 5 fractions, in particularly preferred manner at least 8 fractions.

4. Casting compound according to Claim 3, **characterised in that** the grain sizes of the aggregates exhibit a balanced screen-analysis curve overall, preferably a screen-analysis curve approximating to the Fuller curve.

5. Casting compound according to Claim 3 or 4, characterise in that the amount of foam glass aggregate constitutes at least 80 % of the aggregate, preferably 90 %, in particularly preferred manner 100 %.

6. Casting compound according to one of Claims 3 to 5, **characterised in that** all aggregates with grain size of 4 mm or more consist of crushed foam glass.

7. Casting compound according to one of Claims 3 to 6, **characterised in that** all aggregates with grain size up to 4 mm consist of crushed foam glass.

8. Casting compound according to one of Claims 3 to 7, **characterised in that** the foam glass is crushed in angular manner.

9. Casting compound according to one of Claims 1 [3] to 8, **characterised by** a fibre reinforcement or chip reinforcement.

10. Casting compound according to one of Claims 1 [3] to 9, **characterised in that** the foam-glass lumps exhibit an average compressive strength of over 1 N/mm², preferably over 3 N/mm², in particularly preferred manner on average over 5 N/mm².

11. Casting compound according to one of Claims 1 [3] to 10 for a lightweight backfill concrete, statically loadable lightweight-concrete prefabricated units, non-load-bearing elements, floors, soundproofing elements and such like, **characterised in that** the bulk density and/or pore size of the foam-glass lumps is matched to this use of the casting compound.

12. Casting compound according to one of Claims 1 [3] to 11 for a special use, e.g. radiation shielding, decorative surface, **characterised by** a purposeful formulation of the composition of the raw materials for the production of the foam-glass lumps, for example by addition of lead or pigments, so that the properties of the foam-glass lumps are matched to this use of the casting compound.

13. A structural member that is cast in situ pertaining to multi-storey buildings or civil-engineering structures or a prefabricated element being formed from a casting compound according to one of Claims 1 to 12.

14. Structural member or element according to Claim 13, **characterised by** a cut, sawn, ground and/or milled surface.

15. Structural member or element according to Claim 13 or 14, **characterised in that** the weight per unit volume is below 1,400 kg/m³, preferably below 1,200, in particularly preferred manner around or below 1,000 kg/m³.

16. Structural member or element according to one of Claims 11 to 15, **characterised by** a compressive strength of at least 12, preferably 18, in particularly preferred manner over 25 N/mm².

17. Structural member or element according to one of Claims 11 to 16, **characterised by** a thermal conductivity of max. 0.4, preferably below 0.35, in particularly preferred manner below 0.32 W/mK.

18. Structural member or element according to one of Claims 11 to 17,
**characterised by** a ratio of compressive strength in N/mm² to weight per unit volume (dry) in kg/m³ of over 1:80, preferably over 1:60, in particularly preferred manner over 1:50.

19. A process for producing structured surfaces in cast structural members, **characterised in that** a casting compound with a binder and crushed foam-glass lumps by way of aggregate is poured into a formwork or mould and after setting of the casting compound the surface is eroded, e.g. ground or bush-hammered.

20. Process according to Claim 19, **characterised in that** the surface is sealed.

21. Process according to Claim 19 or 20, **characterised in that** the binder and/or the foam glass are pigmented prior to casting.

22. A process for producing a casting compound according to one of Claims 1 to 12, **characterised in that** foam glass is prepared by being crushed and screened out in fractions and **in that** the crushed fractions are mixed so as to conform to requirements.

23. Process according to Claim 22, **characterised in that** the composition of the casting compound or the composition of the aggregates with respect to quantity, material and grain size of the foam-glass fractions is estimated on the basis of a material-space calculation.

## Revendications

1. Granulat léger pour un matériau de moulage lié avec un liant, comprenant des fragments de verre cellulaire concassé, **caractérisé en ce que** les fragments de verre cellulaire présentent une courbe granulométrique échelonnée entre 0 et la plus grande granulométrie, avec au moins 3 granulométries, de préférence plus de 5, de manière particulièrement préférée au moins 8 granulométries.

2. Utilisation d'un granulat léger selon la revendication 1 pour la réalisation d'un matériau de moulage lié avec un liant.

3. Matériau de moulage coulant et durcissant, en particulier béton léger, contenant un liant, en particulier du ciment, et au moins un granulat léger, le granulat léger étant formé par des fragments de verre cellulaire concassé, **caractérisé en ce que** les fragments de verre cellulaire présentent une courbe granulométrique échelonnée entre 0 et la plus grande granulométrie, avec au moins 3 granulométries, de préférence plus de 5, de manière particulièrement préférée au moins 8 granulométries.

4. Matériau de moulage selon la revendication 3, **caractérisé en ce que** les grosseurs des grains des granulats suivent dans l'ensemble une courbe granulométrique équilibrée - de préférence rapprochée de la courbe de référence de Fuller.

5. Matériau de moulage selon la revendication 3 ou 4, **caractérisé en ce que** la teneur en fragments de verre cellulaire correspond au moins à 80 % des granulats, de préférence à 90 %, de manière particulièrement préférée à 100 %.

6. Matériau de moulage selon une des revendications 3 à 5, **caractérisé en ce que** tous les granulats avec une granularité de 4 mm et plus sont formés par du verre cellulaire concassé.

7. Matériau de moulage selon la revendication 6, **caractérisé en ce que** tous les granulats avec une granularité jusqu'à 4 mm sont formés par du verre cellulaire concassé.

8. Matériau de moulage selon une des revendications 3 à 7, **caractérisé en ce que** le verre cellulaire est concassé en présentant des arêtes vives.

9. Matériau de moulage selon une des revendications 3 à 8, **caractérisé par** une armature de fibres ou de copeaux.

10. Matériau de moulage selon une des revendications 3 à 9, **caractérisé en ce que** les fragments de verre cellulaire ont une résistance à la pression moyenne supérieure à 1 N/mm², de préférence supérieure à 3 N/mm², de manière particulièrement préférée supérieure à 5 N/mm².

11. Matériau de moulage selon une des revendications 3 à 10 pour un béton de remplissage léger, des éléments préfabriqués en béton léger soumis à des sollicitations statiques, des éléments non porteurs, des sols, des éléments de protection phonique et des éléments analogues, **caractérisé en ce que** la masse volumique et/ou la taille des pores des fragments de verre cellulaire sont définies pour cette utilisation du matériau de moulage.

12. Matériau de moulage selon une des revendications 3 à 11 pour une utilisation spécifique, telle que la protection contre les rayonnements, les surfaces décoratives, **caractérisé par** une formulation ciblée de la composition des matières premières pour la réalisation des fragments de verre cellulaire, par exemple par l'addition de plomb ou de matières colorantes, de telle sorte que les propriétés des fragments de verre cellulaire sont adaptées à cette utilisation du matériau de moulage.

13. Élément de construction coulé sur le chantier pour le bâtiment et les travaux publics ou élément préfabriqué avec un matériau de moulage selon une des revendications 3 à 12.

14. Élément de construction coulé sur le chantier ou préfabriqué selon la revendication 13, **caractérisé par** une surface taillée, sciée, meulée et/ou fraisée.

15. Élément de construction coulé sur le chantier ou préfabriqué selon la revendication 13 ou 14, **caractérisé en ce que** la masse volumique est inférieure à 1 400 kg/m³, de préférence inférieure à 1 200 kg/m³, de manière particulièrement préférée inférieure à 1 000 kg/m³.

16. Élément de construction coulé sur le chantier ou préfabriqué selon une des revendications 13 à 15, **caractérisé en ce que** la résistance à la pression est au moins égale à 12 N/mm², de préférence égale à 18 N/mm², de manière particulièrement préférée supérieure à 25 N/mm².

17. Élément de construction coulé sur le chantier ou préfabriqué selon une des revendications 13 à 16, **caractérisé en ce que** la conductibilité thermique est au maximum égale à 0,4 W/mK, de préférence inférieure à 0,35 W/mK, de manière particulièrement préférée inférieure à 0,32 W/mK.

18. Élément de construction coulé sur le chantier ou préfabriqué selon une des revendications 13 à 17, **caractérisé par** un rapport de la résistance à la pression en N/mm² sur la masse volumique (à sec) en kg/m³ supérieur à 1:80, de préférence supérieur à 1:60, de manière particulièrement préférée supérieur à 1:50.

19. Procédé de fabrication de surfaces structurées dans des éléments de construction coulés, **caractérisé en ce qu'**un matériau de moulage contenant un liant et un granulat formé par des fragments de verre cellulaire concassé est coulé dans un coffrage ou un moule et, après le durcissement du matériau de moulage, la surface est érodée, par exemple par meulage ou par bouchardage.

20. Procédé selon la revendication 19, **caractérisé en ce que** la surface est scellée.

21. Procédé selon la revendication 19 ou 20, **caractérisé en ce que** le liant et/ou le verre cellulaire sont teintés avant le coulage.

22. Procédé de fabrication d'un matériau de moulage selon une des revendications 3 à 12, **caractérisé en ce que** le verre cellulaire est préparé par concassage et par tamisage en fractions granulométriques, et **en ce que** les fractions concassées sont mélangées en fonction des exigences.

23. Procédé selon la revendication 22, **caractérisé en ce que** la composition du matériau de moulage ou la composition des granulats, à savoir la quantité, la matière et la granularité des fractions de verre cellulaire sont évaluées à l'aide d'un calcul du volume de la matière.
